Europäisches Patentamt

(19) European Patent Office

Office européen des brevets

(11) Numéro de publication: **0 015 863**
**A1**

(12) ## DEMANDE DE BREVET EUROPEEN

(21) Numéro de dépôt: 80420032.7

(22) Date de dépôt: 10.03.80

(51) Int. Cl.³: **F 16 M 11/00**, A 47 F 7/00,.
A 47 G 1/00, G 09 F 7/18

(30) Priorité: **12.03.79 FR 7906919**

(43) Date de publication de la demande: **17.09.80
Bulletin 80/19**

(84) Etats contractants désignés: **AT BE CH DE GB IT LU NL
SE**

(71) Demandeur: **Patrigot, Léon Eugène, 92, rue Vendôme,
F-69006 Lyon (FR)**

(72) Inventeur: **Patrigot, Léon Eugène, 92, rue Vendôme,
F-69006 Lyon (FR)**

(74) Mandataire: **Maureau, Bernard et al, Cabinet GERMAIN
& MAUREAU Le Britannia - Tour C 20, Boulevard Eugène
Déruelle, F-69003 Lyon (FR)**

(54) **Support pour objets divers.**

㊗ Ce support consiste en une embase (1) dont l'une des faces principales est destinée à coopérer avec une surface d'appui, horizontale ou verticale, et dont la face principale opposée comporte à la fois une rainure transversale (3) pouvant servir de logement à la base de l'objet à supporter, et au moins un bras recourbé (2) pouvant servir soit d'appui pour l'adossement de cet objet lorsqu'il repose dans la rainure précitée, soit de crochet de suspension dudit objet.

Les applications de ce support sont multiples. C'est ainsi qu'il convient aux cadres photographiques, aux plaquettes revant elles-mêmes de support à d'autres objets.

1

L'invention concerne un support pour objets très divers. Dans de nombreux domaines il est nécessaire de pouvoir placer des objets divers sur un support plan tel qu'une table ou tout autre dessus de meuble, ou de pouvoir les suspendre à un mur, à une cloison ou à la paroi latérale d'un meuble; et par objets divers il faut entendre par exemple des cadres photographiques, des documents publicitaires, des plaquettes servant de supports à des produits odorisants ou désodorisants, ..... Dans tous les cas il est nécessaire de disposer d'un support différent suivant que l'objet doit être placé sur un plan horizontal ou être suspendu à une paroi verticale. Cette nécessité conduit à utiliser des supports différents, ce qui oblige :

- les fabricants à produire des supports différents, conduisant ainsi à une augmentation des frais de fabrication, de stockage et de transport;

- les commerçants à disposer de deux stocks de types de supports, les uns pour objets destinés à reposer sur une surface horizontale et les autres pour les objets destinés à être suspendus;

- et les utilisateurs eux-mêmes à adopter soit l'un ou l'autre des types de supports, en fonction de l'endroit où doit être placé l'objet à supporter, ou bien à se procurer les deux types de supports.

Cette situation conduit donc, de façon générale, à une complication et à des frais supplémentaires que l'invention cherche à écarter. Elle a pour objet, à cet effet, un support qui est du type de ceux présentant une rainure transversale pouvant servir de logement à la base de l'objet à supporter, mais comporte en outre au moins un bras recourbé pouvant servir soit d'appui pour l'adossement de l'objet à supporter lorsqu'il repose dans la rainure précitée, soit de crochet de suspension dudit objet.

L'invention sera bien comprise d'ailleurs à l'aide de la description qui suit, en référence au dessin schématique annexé représentant, à titre d'exemple non limitatif, une forme d'exécution de ce support :

Figures 1 et 2 en sont des vues en perspective, respectivement d'avant et d'arrière, en position de repos sur une surface horizontale;

Figure 3 est, à plus grande échelle, une vue en perspective du support seul, et

Figure 4 en est une vue en perspective, avec coupe partielle, en position d'accrochage.

Ce support est constitué par une pièce, avantageusement en matière plastique moulée, pouvant être considérée comme étant formée d'une embase 1 et de deux bras 2. L'embase 1 présente par exemple le profil représenté au dessin, c'est-à-dire une partie avant et une partie arrière dont les faces supérieures sont inclinées; ces deux parties sont séparées par une rainure transversale 3. Les deux bras 2 viennent de moulage avec la partie arrière et présentent le profil visible au dessin, c'est-à-dire qu'ils sont constitués chacun d'une jambe 2a se terminant à son sommet par une partie recourbée 2b dont l'extrémité se trouve soit à l'aplomb, soit en arrière de la face arrière de la rainure 3.

Quant à la face inférieure de l'embase 1, elle est plane et est enduite d'une colle recouverte par une pellicule amovible 4.

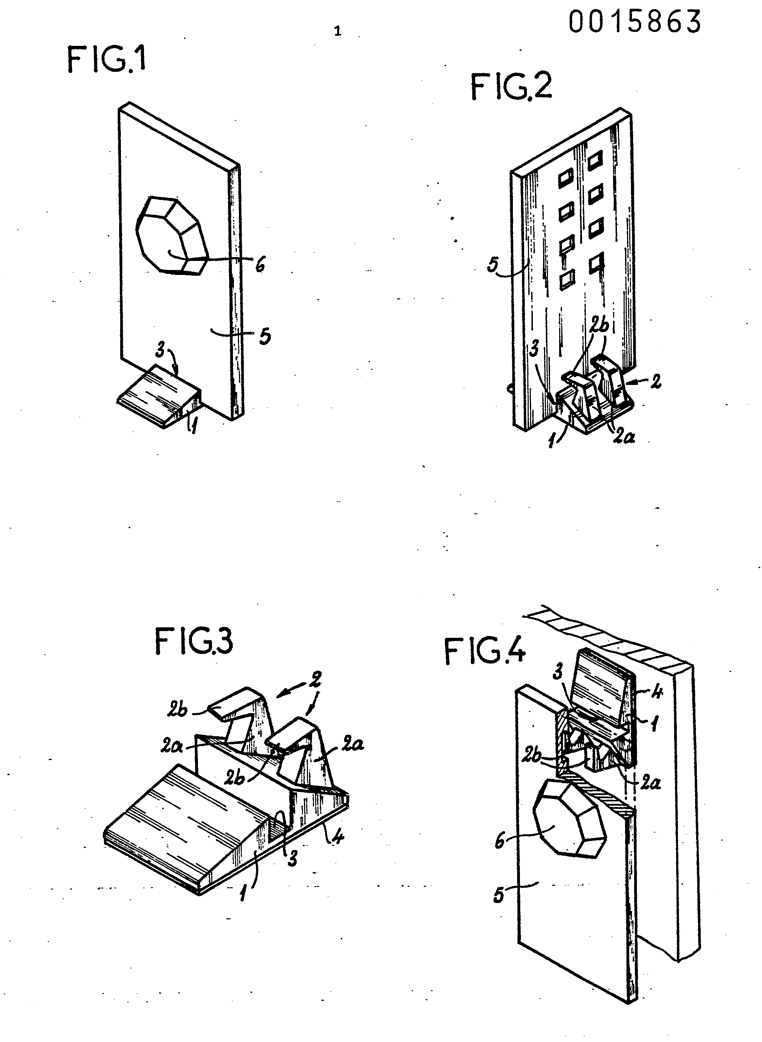

Ce support peut être utilisé soit pour recevoir des objets devant être placés sur un support plan tel qu'une table ou le dessus d'un meuble, soit pour permettre l'accrochage de ces objets à un mur, à une paroi ou à la face latérale d'un meuble. Ces deux possibilités d'utilisation sont représentées respectivement aux figures 1 et 2 dans le cas particulier, donné à titre d'exemple, d'une plaquette 5 servant de support à une ampoule 6 contenant un produit désodorisant.

Dans le premier cas représenté à la figure 1, la plaquette 5 est introduite par son bord vertical inférieur dans la rainure 3 de l'embase 1, étant entendu que l'épaisseur de cette plaquette est telle qu'elle puisse pénétrer pratiquement sans jeu dans cette rainure. La

3

plaquette peut ainsi demeurer en position verticale ou sensiblement verticale, en prenant appui sur une surface horizontale quelconque au moyen de l'embase 1. Il est à noter que la tenue de la plaquette 5 par l'embase 1 se fait dans d'excellentes conditions car la plaquette prend, d'une part, appui par sa partie inférieure dans la rainure 3 et, d'autre part, par sa face arrière contre les extrémités 2b des deux bras 2. L'ensemble embase 1 et bras 2 se comporte donc à la manière d'un véritable piètement.

La deuxième possibilité d'utilisation est représentée à la figure 4. Dans ce cas, la même plaquette 5 repose, non pas sur une surface horizontale, mais est accrochée le long d'une paroi verticale. La même embase 1 est cependant utilisée. Ce résultat est atteint en enlevant la pellicule 4 prévue au dos de l'embase 1 et en réalisant la liaison entre cette embase et la surface verticale destinée à la recevoir au moyen de la colle prévue sur le dos de l'embase. L'embase 1 étant ainsi fixée, la plaquette 5 est alors suspendue à cette embase par coopération des deux bras 2 avec des moyens prévus sur la face arrière de la plaquette 5. Ces moyens peuvent consister soit en des fenêtres aménagées dans cette plaquette, soit en un anneau de suspension. Dans tous les cas, les bras 2 servent, par leurs extrémités recourbées 2b, de crochets permettant la suspension de la plaquette 5.

Comme il va de soi, l'invention ne se limite pas à la seule forme d'exécution de ce support qui a été ci-dessus indiquée à titre d'exemple; elle en embrasse au contraire toutes les variantes de réalisation.

0015863

4

<u>REVENDICATIONS</u>

1.- Support pour objets divers, tels que cadres photographiques, plaquettes et autres, du type de ceux comportant une rainure servant de logement à la base de l'objet à supporter, caractérisé en ce que latéralement à cette rainure (3) il comporte au moins un bras recourbé (2) pouvant servir soit d'appui pour l'adossement de l'objet à supporter lorsqu'il repose dans la rainure précitée, soit de crochet de suspension dudit objet.

2.- Support pour objets divers selon la revendication 1, caractérisé en ce que les extrémités libres de son ou de ses crochets sont situées du même côté de la rainure et en retrait par rapport à elle.

3.- Application du support selon les revendications 1 et 2 à la fixation murale d'un objet, caractérisé en ce que la face dorsale de cet objet comporte des fenêtres coopérant avec les bras du support.

FIG.1

FIG.2

FIG.3

FIG.4

0015863

0015863
Numéro de la demande

**Office européen des brevets**

**RAPPORT DE RECHERCHE EUROPEENNE**

EP 80 42 0032

| Catégorie | Citation du document avec indication, en cas de besoin, des parties pertinentes | Revendication concernée |
|---|---|---|
| | <u>DE - C - 806 381</u> (GERLOF)<br>* Figures 1-3; page 2, lignes 27-58 *<br><br>-- | 1 |
| | <u>US - A - 3 557 480</u> (FOTO-CUBE)<br>* Figures 1-5; colonne 2, lignes 3-9; colonnes 3,4 *<br><br>-- | 1 |
| | <u>US - A - 4 132 018</u> (HUGHES)<br>* Figures 1-6; colonne 1, lignes 6-10: colonne 2, lignes 1-59 *<br><br>-- | 1 |
| | <u>GB - A - 1 391 020</u> (ROVEX LTD.)<br>*-Figures 1-6; page 1, lignes 25-33; page 1, ligne 83 - page 2, ligne 25 *<br><br>-- | 1 |
| | <u>FR - A - 583 471</u> (CAMPISTRON & LITREM)<br>* Figures 1-6; page 1, ligne 40 - page 2, ligne 16 *<br><br>-- | 1 |
| A | <u>GB - A - 947 357</u> (SIGMA SIGNS LTD.)<br>* En entier *<br><br>-- | |
| A | <u>FR - A - 469 487</u> (WALLACE)<br>* Figures 1-6; page 1, ligne 1 - page 2, ligne 32 * | |

**CLASSEMENT DE LA DEMANDE (Int. Cl. 3)**

F 16 M 11/00
A 47 F 7/00
A 47 G 1/00
G 09 F 7/18

**DOMAINES TECHNIQUES RECHERCHES (Int. Cl. 3)**

F 16 M
F 16 B
A 47 F
A 47 G
G 09 F

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achevement de la recherche | Examinateur |
|---|---|---|
| La Haye | 03-06-1980 | JAIK |

OEB Form 1503.1 06.78